# EUROPÄISCHE PATENTSCHRIFT

(11) **EP 3 210 357 B1**
(45) Veröffentlichungstag und Bekanntmachung des Hinweises auf die Patenterteilung: **15.04.2020**
(21) Anmeldenummer: 15784567.8
(22) Anmeldetag: 15.10.2015
(51) Int. Cl.: H04L 29/06, H04L 9/32, H04W 12/06, G06F 21/44, G09C 5/00

(54) **VERFAHREN ZUM AUTHENTIFIZIEREN EINES BENUTZERGERÄTS BEI DER ANMELDUNG AN EINEM SERVER**
METHOD FOR AUTHENTICATING A USER DEVICE DURING THE PROCESS OF LOGGING INTO A SERVER
PROCÉDÉ D'AUTHENTIFICATION D'UN ÉQUIPEMENT D'UTILISATEUR LORS DE LA DEMANDE DE CONNEXION À UN SERVEUR

(30) Priorität: 24.10.2014 DE 102014015814
(43) Veröffentlichungstag der Anmeldung: 30.08.2017
(73) Patentinhaber: Unify GmbH & Co. KG, 80807 München (DE)
(72) Erfinder: LEDERER, Thomas, 82211 Herrsching (DE)
(74) Vertreter: Fritzsche, Thomas
(86) Internationale Anmeldenummer: PCT/EP2015/002039
(87) Internationale Veröffentlichungsnummer: WO 2016/062386

(56) Entgegenhaltungen:
- EP-A2- 0 734 000
- WO-A1-2010/116109
- US-A1- 2011 197 266
- US-A1- 2013 133 086

## Beschreibung

Die vorliegende Erfindung betrifft ein Verfahren zum Authentifizieren eines einem Benutzer zugeordneten Benutzergeräts bei der Anmeldung an einem Server gemäß Anspruch 1, ein dieses Verfahren implementierendes Computerprogrammprodukt gemäß Anspruch 8, einen maschinenlesbaren Datenträger mit darauf gespeichertem Computerprogrammprodukt gemäß Anspruch 9 sowie ein Computersystem gemäß Anspruch 10, auf dem das Verfahren ausgeführt werden kann.

Bekannte Verfahren zum Authentifizieren eines Benutzers bzw. eines Benutzergeräts bei der Anmeldung an einem Server werden auch als Login bezeichnet, womit man sich beispielsweise an Portalen, an Rechnern oder in VPN-Netzen anmelden bzw. authentifizieren kann. Derartige Verfahren gehen davon aus, dass der Benutzer eine Kennung - die auch als Benutzer-ID, Login-ID oder User-ID bezeichnet wird - sowie ein Passwort angibt. Erweiterungen zur Erhöhung der Sicherheit erfordern eine 2-Faktor-Authentifizierung, welche zusätzlich ein generiertes Token (vergleiche beispielsweise RSA SecurID) anfordern, oder sie erfordern ein sogenanntes Challenge-Response-Verfahren für eine zusätzliche Absicherung. Bei diesen bekannten Verfahren sind allerdings die Eingabe der Benutzer-ID sowie auch die Übertragung dieser Benutzer-ID erforderlich. Ein weiteres bekanntes Authentifizierungsverfahren ist "Sesame" von Google: Hierbei wird eine Kennung und ein Passwort auf einem separaten Weg, d. h. nicht von einem Web-Terminal, sondern von einem eigenen Smartphone aus, an den Server übertragen, und über eine von einem QR-Code in einer Webseite gescannte und übermittelte Session-ID erfolgt dann das Mapping.

Außerdem ist der Einsatz von biometrischen Verfahren bekannt, bei denen üblicherweise auf die Eingabe einer User-ID gänzlich verzichtet wird. Nachteilig bei solchen biometrischen Verfahren ist jedoch, dass ein hoher technischer Aufwand erforderlich ist, um sichere biometrische Daten - beispielsweise einen Iris-Scan oder einen von einem Sensor erfassten Fingerabdruck - vom Benutzer zu lesen.

Bei diesen Verfahren wird es als nachteilig empfunden, dass der Benutzer nicht nur ein Passwort eingeben muss, sondern auch zusätzlich noch seine Benutzer-ID. Diese Vorgehensweise wird als zu umständlich empfunden.

US 2013/0133086 offenbart ein Verfahren zum Authentifizieren eines Nutzers, der eine Transaktion eines Service-Providers anfordert. Das Verfahren umfasst die folgenden Schritte: Verwenden von Authentifizierungsdaten, welche auf einem Bildschirm eingelesen werden, um einen Authentifizierungscode zu erzeugen, welcher für den Nutzer und die angeforderte Transaktion spezifisch ist; Lesen des Authentifizierungscodes, welcher auf einem mobilen Terminal angezeigt wird, unter Verwendung einer Lesevorrichtung einer digitalen Vorrichtung; und Senden des eingelesenen Authentifizierungscodes von der digitalen Vorrichtung zu dem Service-Provider, um den Nutzer zu authentifizieren.

Der Erfindung liegt somit die Aufgabe zugrunde, den Authentifizierungsvorgang zu vereinfachen, d. h. schneller und komfortabler zu machen.

Diese Aufgabe wird erfindungsgemäß mit einem Verfahren gemäß Anspruch 1, einem Computerprogrammprodukt gemäß Anspruch 8, einem maschinenlesbaren Datenträger mit darauf gespeichertem Computerprogrammprodukt gemäß Anspruch 9 bzw. mit einem Computersystem gemäß Anspruch 10 gelöst. Vorteilhafte Weiterbildungen der Erfindung sind Gegenstand der abhängigen Ansprüche.

Bei dem erfindungsgemäßen Verfahren wird davon ausgegangen, dass sich ein Benutzer mit einem ihm zugeordneten Benutzergerät nur dann an einem Server anmelden und auch authentifizieren kann, wenn sein Benutzergerät dem Server bereits bekannt ist, also zu einer dem Server bekannten Benutzergerätegruppe gehört. Ferner wird davon ausgegangen, dass dem Server sowohl die Benutzer-ID als auch das Passwort des betreffenden Benutzergeräts bzw. der gesamten Gruppe bekannt sind. Erfindungsgemäß wird dabei in folgender Weise vorgegangen: Der Server generiert bzw. erzeugt Eingabeaufforderungen (auch Challenges genannt), die jeweils nur während einer definierten Zeitdauer gültig sind, und zeigt diese Eingabeaufforderungen nacheinander, aber jeweils einzeln, in einer Anmeldemaske an. Sobald sich ein Benutzergerät anmelden und authentifizieren möchte, liest es die zum Zeitpunkt der Anmeldung angezeigte Eingabeaufforderung ein - beispielsweise durch manuelle Eingabe seitens des Benutzers - und berechnet eine Antwort - häufig auch als Response bezeichnet - unter Verwendung dieser Eingabeaufforderung, seines Passworts und der aktuellen Zeit. Dann übermittelt das Benutzergerät die berechnete Antwort an die Anmeldemaske, wonach die Antwort von der Anmeldemaske an den Server übermittelt wird. Der Server berechnet dann zumindest für einen Teil der Benutzergerätegruppe jeweils eine Antwort unter jeweiliger Verwendung der zum Zeitpunkt der Anmeldung angezeigten Eingabeaufforderung, des jeweiligen Passworts sowie der aktuellen Zeit und vergleicht die von ihm berechneten Antworten mit der vom Benutzergerät übermittelten Antwort. Der Ausdruck "zumindest für einen Teil der Benutzergerätegruppe" ist so zu verstehen, dass der Server nicht zwangsläufig für die gesamte Benutzergerätegruppe jeweils eine Antwort berechnet und mit der vom Benutzergerät übermittelten Antwort vergleicht, sondern es reicht aus, wenn er - beispielsweise nach einer zuvor festgelegten (beispielsweise nach der bisherigen Häufigkeit der Anmeldung der jeweiligen Geräte priorisierten) oder aber gemäß einer per Zufallsgenerator ermittelten Reihenfolge die jeweiligen Antworten berechnet und diese mit der vom Benutzergerät übermittelten Antwort vergleicht. Dies führt er solange aus, bis er eine Übereinstimmung festgestellt hat. In einem Extremfall könnte dies bedeuten, dass bereits die erste vom Server berechnete Antwort mit der vom Benutzergerät übermittelten Antwort übereinstimmt, in einem anderen extremen Fall kann es sein, dass der Server tatsächlich alle Antworten für die ihm bekannte Benutzergruppe berechnen und mit der übermittelten Antwort vergleichen muss, weil erst die zuletzt berechnete Antwort eine Übereinstimmung ergibt.

Für dasjenige Benutzergerät, für das die vom Server berechnete Antwort mit der vom Benutzergerät übermittelten Antwort übereinstimmt, bestätigt der Server schließlich die Authentifizierung, womit das entsprechende Benutzergerät am Server angemeldet ist.

Somit ist ersichtlich, dass erfindungsgemäß der Login-Vorgang bzw. die Authentifizierung stark vereinfacht wird, da nur eine einzige Information angegeben und übertragen werden muss, ohne zusätzlich auch noch die eigene Benutzer-ID übertragen zu müssen.

Die Tatsache, dass die jeweiligen Eingabeaufforderungen jeweils nur während einer definierten Zeitdauer gültig sind, bedeutet, dass nach Ablauf dieser Zeitdauer eine neue Eingabeaufforderung generiert und angezeigt wird. Dies erhöht die Sicherheit des Authentifizierungsverfahrens gegen sogenannte Brute-Force-Angriffe.

Gemäß einer Ausführungsform des erfindungsgemäßen Verfahrens kann vorgesehen sein, zur Erhöhung der Sicherheit die Authentifizierung zweimal hintereinander zu durchlaufen, wobei dann die erste Authentifizierung nur als vorläufig gilt und eine "vollständige" Authentifizierung erst nach einer zweiten Authentifizierungsrunde angenommen werden kann, wobei dann die aktuelle Zeit verwendet wird, die bei der Anzeige der zweiten Eingabeaufforderung aktuell war. In diesem Zusammenhang kann der Rechenaufwand des Servers bei der "zweiten Runde" der Authentifizierung drastisch reduziert werden, indem der Server nur eine Antwort für das vorläufig authentifizierte Benutzergerät berechnet und nicht für einen größeren Teil der Benutzergerätegruppe, um die einzige berechnete Antwort mit der vom Benutzergerät übermittelten Antwort zu vergleichen.

Für die reibungslose Durchführung der Authentifizierung ist es von Vorteil, wenn die Zeiten, die jeweils für die Berechnung der Eingabeaufforderungen verwendet werden, ein bestimmtes, definiertes Zeitfenster umfassen, das so groß ist, dass die vom Benutzergerät berechnete Antwort typischerweise innerhalb dieses Zeitfensters zum Server zurückübertragen werden kann, wonach der Server die Berechnung der verschiedenen Antworten auf die Eingabeaufforderung für die einzelnen Benutzergeräte unter Verwendung dieser aktuellen Zeit mit dem großen Zeitfenster durchführen kann. In anderen Worten sollte das Zeitfenster so groß sein und demzufolge die "aktuelle Zeit" so ungenau angegeben werden, dass der Server die beim Berechnen seiner verschiedenen Antworten die gleiche Zeit "sieht" bzw. wahrnimmt wie das Benutzergerät beim Berechnen seiner Antwort auf die Eingabeaufforderung vor dem Übermitteln dieser Antwort an den Server. Ein derartiges Zeitfenster ist vorzugsweise 30 bis 60 Sekunden groß.

Gemäß einer vorteilhaften Ausgestaltung des erfindungsgemäßen Verfahrens weist dieses folgende weiteren Schritte auf: Der Server berechnet für den betreffenden Teil der Benutzergerätegruppe nicht nur eine einzige Antwort unter Verwendung der jeweiligen aktuellen Zeit bzw. Eingabeaufforderung, sondern er berechnet jeweils eine weitere, zusätzliche Antwort unter Verwendung der jeweils vorhergehenden Eingabeaufforderung und damals gültigen aktuellen Zeit und vergleicht für jedes Benutzergerät die beiden berechneten Antworten mit der vom zu authentifizierenden Benutzergerät übermittelten Antwort, wonach er die Authentifizierung für dasjenige Benutzergerät bestätigt, für das die vom Server berechnete Antwort für die aktuelle Eingabeaufforderung oder die vorhergehende Aufforderung mit der vom Benutzergerät übermittelten Antwort übereinstimmt. Auf diese Weise kann sichergestellt werden, dass auch Antworten von einem zu authentifizierenden Benutzergerät als richtig erkannt werden, die trotz Vorsehen eines entsprechend großen Zeitfensters so spät beim Server eintreffen, dass er schon die nächste Eingabeaufforderung erzeugt und für die Berechnung der Antworten zugrunde gelegt hat. In diesem Fall wird es einem Benutzer, der das betreffende Benutzergerät am Server anmelden möchte, erspart, sich nochmals authentifizieren zu müssen, obwohl er eine eigentlich korrekte Authentifizierung durchgeführt hatte.

Gemäß einer vorteilhaften Weiterbildung des erfindungsgemäßen Verfahrens wird die Eingabeaufforderung als ein QR-Code erzeugt und angezeigt. Insbesondere bei Verwendung von Smartphones kann ein derartiger QR-Code eingescannt und daraufhin leicht eine entsprechende Antwort berechnet werden. Diese Ausführungsform erhöht den Komfort für Benutzer von Smartphones oder ähnlichen, mit einem QR-Code-Scanner ausgestatteten, Geräten beträchtlich.

Als Variante ist es erfindungsgemäß auch möglich, zur Berechnung einer jeweiligen Eingabeaufforderung statt der jeweils aktuellen Zeit eine - beispielsweise fallweise von einem guten Zufallsgenerator erzeugte - Zufallszahl zu verwenden, die jedoch ebenfalls nur während einer definierten Zeitdauer gültig ist.

Gemäß einer Ausführungsform kann es von Vorteil sein, wenn erst auf Anforderung durch ein Benutzergerät eine Eingabeaufforderung erzeugt und angezeigt wird.

Für die Berechnung der Antwort wird üblicherweise eine Hash-Berechnung eingesetzt, und es fließt ein sogenanntes Shared Secret ein, das als Passwort verwendet wird. In der Regel wird hier ein sogenannter "Pre-Shared Key" verwendet, also eine längere Folge von zufällig erzeugten Bytes. Dieser Vorgang ist ausführlich beschrieben in http://de.wikipedia.org/wiki/Pre-shared_key. Nicht zu verwechseln hiermit ist die Tatsache, dass die Antwort bzw. Response häufig auch als One Time Password (OTP) oder Einmalpass- oder -kennwort bezeichnet wird, das nichts mit dem Pre-Shared Key bzw. Passwort zu tun hat. Details hierzu sind zu entnehmen aus: http://de.wikipedia.org/wiki/Einmalkennwort.

Als zur vorliegenden Erfindung gehörig wird auch ein Computerprogrammprodukt mit Programmcode zur Durchführung des vorstehend erläuterten Verfahrens sowie ein maschinenlesbarer Datenträger mit darauf gespeichertem Computerprogrammprodukt angesehen, wie sie in Anspruch 8 bzw. Anspruch 9 definiert sind.

Die der Erfindung zugrunde liegende Aufgabe wird außerdem gelöst mit einem Computersystem, das umfasst: einen Server zum Generieren von jeweils nur während einer definierten Zeitdauer gültigen Eingabeaufforderungen, zum Speichern von Benutzer-IDs sowie von Passwörtern und zum Berechnen von Antworten auf die Eingabeaufforderungen, eine Mehrzahl von Benutzergeräten, von denen jedes einerseits zu einer Benutzergerätegruppe gehört und sowohl eine Benutzer-ID als auch ein Passwort besitzt und andererseits eine Antwort auf die Eingabeaufforderungen berechnen kann, und eine dem Server zugeordnete Anmeldemaske zur Anzeige der Eingabeaufforderungen und zur Eingabe der berechneten Antworten, wobei sich das erfindungsgemäße Computersystem dadurch auszeichnet, dass der Server eine Steuereinrichtung zum Ausführen des vorstehend erläuterten Verfahrens aufweist.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine Übersichtsdarstellung einer Ausführungsform eines erfindungsgemäßen Computersystems, aus der auch der Ablauf des erfindungsgemäßen Verfahrens ersichtlich ist;
- Fig. 2: eine vergrößerte Darstellung eines Speichers für die Verwaltung der Benutzergeräte und der ihm zugeordneten Daten; und
- Fig. 3: eine Übersicht über die auftretenden Eingabeaufforderungen, Antworten, Zeiten und Benutzergeräte.

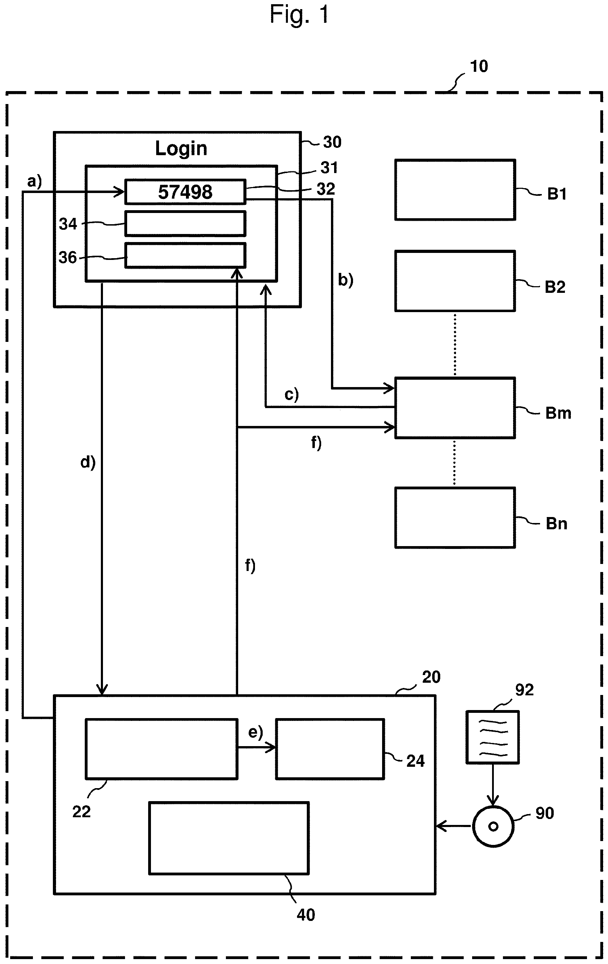

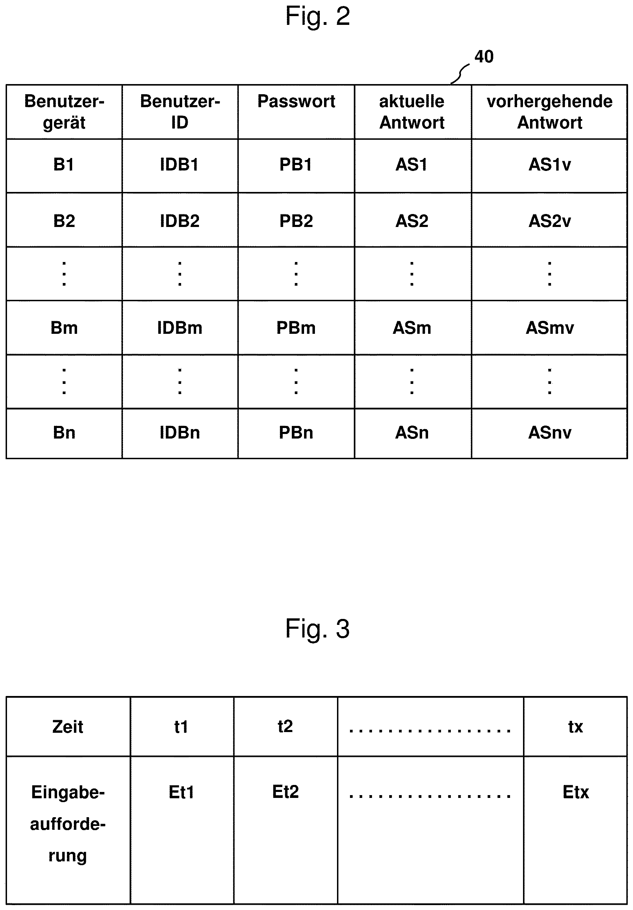

Fig. 1 zeigt eine Ausführungsform eines erfindungsgemäßen Computersystems 10, anhand dessen das erfindungsgemäße Verfahren erläutert wird. Ein Server 20 ist mit einer Webseite 30 bzw. einem sogenannten Login-Screen verbunden, auf dem eine Anmeldemaske 31 dargestellt ist und generiert in einem Schritt a) für jede Zeit t1, t2, ..., tx jeweils Eingabeaufforderungen Et1, Et2, ..., Etx (vergleiche Fig. 3), die jeweils nur während einer definierten Zeitdauer von typischerweise 30 Sekunden gültig sind. Diese Eingabeaufforderungen Et1-Etx werden nacheinander jeweils einzeln vom Server 20 auf der Anmeldemaske 31 angezeigt. In Fig. 1 ist hierfür in beispielhafter Weise die Zahlenfolge 57498 als Eingabeaufforderung im Fenster 32 für die Eingabeaufforderung angezeigt. Die Anmeldemaske 31 umfasst in der dargestellten Ausführungsform ein Fenster 32 für die Eingabeaufforderung sowie ein Fenster 34 für die Antwort.

In Fig. 1 sind außerdem Benutzergeräte B1, B2, ..., Bn dargestellt, die zu einer entsprechenden Benutzergerätegruppe gehören, die dem Server 20 bekannt sind und die sich demzufolge bei ihm anmelden können. In einem Schritt b) liest ein Benutzergerät Bm die aktuelle Eingabeaufforderung Et2, die in diesem Beispiel zur Zeit t2 angezeigt wird, ein und berechnet eine Antwort ABm unter Verwendung dieser Eingabeaufforderung Et2, des dem Benutzergerät Bm zugeordneten Passworts PBm und der aktuellen Zeit t2. In einem Schritt c) übermittelt das Benutzergerät Bm die berechnete Antwort ABm an das Fenster 34 der Anmeldemaske 31, worauf diese in einem Schritt d) die Antwort ABm an den Server 20 weiterleitet. Der Server 20 fängt nun an, nacheinander bzw. (ggf. teilweise) parallel für die Geräte B1-Bn jeweils eine Antwort AS1-ASn unter jeweiliger Verwendung der zum Zeitpunkt der Anmeldung angezeigten Eingabeaufforderung Et2, des jeweiligen Passworts - PB1-PBn und der aktuellen Zeit t2 zu berechnen und vergleicht in einer Vergleichseinheit 24 die in einer Antwortberechnungseinheit 22 von ihm berechneten Antworten AS1-ASn schnellstmöglich mit der vom Benutzergerät Bm übermittelten Antwort ABm. Sobald der Server eine Übereinstimmung der Antwort ABm mit einer von ihm berechneten Antwort ASm feststellt, bestätigt er in einem Schritt f) die Authentifizierung für das betreffende Benutzergerät Bm und teilt dies dem Benutzergerät Bm mit. Diese Bestätigung der Authentifizierung wird gemäß der Ausführung von Fig. 1 in einem eigenen Bestätigungsfenster 36 der Anmeldemaske 31 angezeigt.

Falls die Sicherheit der Authentifizierung verbessert werden soll, kann das anhand der Schritte a) bis f) beschriebene Verfahren nach einer gewissen Wartezeit, beispielsweise zum Zeitpunkt t3, erneut durchlaufen werden, wobei dann die in Schritt f) bestätigte Authentifizierung für das Benutzergerät Bm nur als vorläufig gültig angenommen wird und die Authentifizierung erst nach erfolgreichem Durchlaufen der zweiten Authentifizierungsrunde als endgültig angesehen wird. Hierbei braucht bei der zweiten Ausführung des Schritts e) abweichend vom ersten Durchlauf nur eine einzige Antwort für das vorläufig authentifizierte Benutzergerät Bm berechnet zu werden, die mit der vom Benutzergerät Bm übermittelten Antwort ABm verglichen wird.

Die Zeiten t1-tx werden gemäß dieser Ausführungsform nur mit einer Genauigkeit von 30 Sekunden angegeben, umfassen somit ein Zeitfenster von 30 Sekunden, während der die Eingabeaufforderungen Et1-Etx gültig sind, damit ein Benutzer, der sich in einer späten Phase der Anzeige der betreffenden Eingabeaufforderung (hier im Beispiel Et2) nach Berechnung seiner Antwort und Rückmeldung an den Server 20 immer noch innerhalb dieses Zeitfensters befindet, innerhalb der der Server 20 seine Antworten auf die Eingabeaufforderung Et2 berechnet und mit der Antwort ABm des Benutzergeräts Bm vergleicht.

Damit in dem Fall, in dem die von dem Benutzergerät Bm beispielsweise für eine zur Zeit t1 generierte Eingabeaufforderung Et1 berechnete Antwort ABm doch zu spät beim Server 20 eintrifft und dieser zur Zeit t2 schon eine neue Eingabeaufforderung Et2 anzeigt und seine Antworten AS1-ASn unter Verwendung dieser neuen Eingabeaufforderung Et2 berechnet, führt der Server 20 zusätzlich eine Berechnung von Antworten AS1v-ASnv unter Verwendung der früheren Eingabeaufforderung Et1, die zur Zeit t1 erstellt wurde, durch und vergleicht diese Antworten mit der vom Benutzergerät Bm übermittelten Antwort ABm und authentifiziert bei Übereinstimmung der Antwort ABm mit der für den früheren Zeitpunkt t1 vom Server 20 berechneten Antwort ASmv die Authentifizierung.

In lediglich schematischer Weise ist in Fig. 1 außerdem eine CD-ROM 90 als Datenträger dargestellt, auf dem ein Computerprogamm 92 gespeichert ist, welches das erfindungsgemäße Verfahren implementiert und auf dem Computersystem 10 bzw. auf dem Server 20 lauffähig ist.

Fig. 2 zeigt exemplarisch einen Speicher 40 für die Verwaltung der Benutzergeräte B1, B2, ..., Bn und der ihnen zugeordneten Passwörter PB1, PB2, ..., PBn sowie der zu einem bestimmten Zeitpunkt (beispielsweise t2) und dem vorhergehenden Zeitpunkt (dementsprechend beispielsweise t1) vom Server 20 berechneten Antworten AS1-ASn bzw. AS1v-ASnv.

Fig. 3 zeigt in beispielhafter Weise in tabellarischer Übersicht die Zuordnung der zu den jeweiligen Zeiten t1-tx generierten Eingabeaufforderungen Et1-Etx.

Die Erfindung wurde vorstehend unter Verwendung eines Smartphones als anzumeldendes bzw. zu authentifizierendes Benutzergerät beschrieben. Es ist jedoch klar, dass auch ein "normaler" Computer, der sich beispielsweise über das Internet oder ein Lokalnetz an einem Server anmelden möchte, mit dem gleichen Verfahren anmelden kann.

Es ist festzuhalten, dass die unter Bezug auf die dargestellten Ausführungsformen beschriebenen Merkmale der Erfindung, wie beispielsweise die Art und Ausgestaltung der einzelnen Verfahrensschritte und -parameter oder Ausgestaltung der Eingabeaufforderungen und Antworten sowie der Gerätekomponenten wie z.B. der Speicher- und Anzeigevorrichtungen, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Bezugszeichenliste

10 = Computersystem
20 = Server
22 = Antwortberechnungseinheit
24 = Vergleichseinheit
30 = Webseite
31 = Anmeldemaske
32 = Fenster für Eingabeaufforderung
34 = Fenster für Antwort
36 = Fenster für Bestätigung
40 = Speicher für Verwaltung von Benutzergeräten
90 = Datenträger
92 = Computerprogrammprodukt
ABm = Antwort, vom Benutzergerät Bm berechnet
AS1-ASn = Antworten, vom Server berechnet
AS1v-ASnv = Antworten, vom Server für vorhergehende Eingabeaufforderung berechnet
B1-Bn = Benutzergeräte
Et1-Etx = Eingabeaufforderungen
IDB1-IDBn = Benutzer-IDs der Benutzergeräte B1-Bn
PB1-PBn = Passwörter der Benutzergeräte B1-Bn
t1-tx = Zeitpunkte für Berechnung der Eingabeaufforderungen Et1-Etx

## Patentansprüche

1. Computerimplementiertes Verfahren zum Authentifizieren eines einem Benutzer zugeordneten Benutzergeräts (Bm) bei der Anmeldung an einem Server (20), wobei das Benutzergerät (Bm) zu einer dem Server (20) bekannten Benutzergerätegruppe (B1-Bn) gehört und sowohl eine Benutzer-ID (IDBm) als auch ein Passwort (PBm) besitzt, welche dem Server (20) bekannt sind,
umfassend folgende Schritte:
a) der Server (20) generiert Eingabeaufforderungen (Et1-Etx) für jede Zeit (t1-tx), die jeweils nur während einer definierten Zeitdauer gültig sind, und zeigt diese Eingabeaufforderungen (Et1-Etx) nacheinander jeweils einzeln in einer Anmeldemaske (31) an,
b) das Benutzergerät (Bm) liest die zum Zeitpunkt der Anmeldung angezeigte Eingabeaufforderung (Et2) ein und berechnet eine Antwort (ABm) unter Verwendung dieser Eingabeaufforderung (Et2), seines Passworts (PBm) und der aktuellen Zeit (t2),
c) das Benutzergerät (Bm) übermittelt die berechnete Antwort (ABm) an die Anmeldemaske (31),
d) die Antwort (ABm) wird von der Anmeldemaske (31) an den Server (20) übermittelt,
e) der Server (20) berechnet zumindest für einen Teil der Benutzergerätegruppe (B1-Bn) jeweils eine Antwort (AS1-ASn) unter jeweiliger Verwendung der zum Zeitpunkt der Anmeldung angezeigten Eingabeaufforderung (Et2), des jeweiligen Passworts (PB1-PBn) sowie der aktuellen Zeit (t2) und vergleicht die von ihm berechneten Antworten (AS1-ASn) mit der vom Benutzergerät (Bm) übermittelten Antwort (ABm), und
f) der Server (20) bestätigt die Authentifizierung für dasjenige Benutzergerät (Bm), für das die vom Server (20) berechnete Antwort (ASm) mit der vom Benutzergerät (Bm) übermittelten Antwort (ABm) übereinstimmt.

2. Verfahren nach Anspruch 1,
**dadurch gekennzeichnet, dass** die in Schritt f) bestätigte Authentifizierung für das Benutzergerät (Bm) als vorläufig angenommen wird und die Schritte a) bis f) nach Ablauf einer vorbestimmten Wartezeit unter Verwendung der zu diesem Zeitpunkt herrschenden aktuellen Zeit (t3) erneut ausgeführt werden, wonach bei nochmaliger bestätigter Authentifizierung die Authentifizierung als endgültig angesehen wird.

3. Verfahren nach Anspruch 2,
**dadurch gekennzeichnet, dass** der Server (20) bei der zweiten Ausführung des Schritts e) nur eine Antwort (ASm) für das vorläufig authentifizierte Benutzergerät (Bm) berechnet und mit der vom Benutzergerät (Bm) übermittelten Antwort (ABm) vergleicht.

4. Verfahren nach einem der vorhergehenden Ansprüche,
**dadurch gekennzeichnet, dass** die Zeiten (t1-tx), die für die Berechnung der Eingabeaufforderungen (Et1-Etx) verwendet werden, jeweils ein definiertes Zeitfenster umfassen, das so bemessen ist, dass die vom Benutzergerät (Bm) berechnete Antwort (ABm) typischerweise innerhalb dieses Zeitfensters zum Server (20) zurück übertragen werden kann, wobei das Zeitfenster vorzugsweise eine Dauer von 30 bis 60 Sekunden aufweist.

5. Verfahren nach einem der vorhergehenden Ansprüche,
**gekennzeichnet durch** folgende Schritte:
g) der Server (20) berechnet zumindest für einen Teil der Benutzergerätegruppe (B1-Bn) jeweils eine zusätzliche Antwort (AS1v-ASnv) unter jeweiliger Verwendung derjenigen, früheren, Eingabeaufforderung (Et1), die der zum Zeitpunkt (t2) der Anmeldung angezeigten Eingabeaufforderung (Et2) unmittelbar vorhergeht, des jeweiligen Passworts (PB1-PBn) sowie der während der früheren Eingabeaufforderung (Et1) gültigen Zeit (t1) und vergleicht diese von ihm berechneten Antworten (AS1v-ASnv) ebenfalls mit der vom Benutzergerät (Bm) übermittelten Antwort (ABm), und
h) der Server (20) bestätigt die Authentifizierung für dasjenige Benutzergerät (Bm), für das die vom Server (20) berechnete Antwort (ASm, ASmv) mit der vom Benutzergerät (Bm) übermittelten Antwort (ABm) übereinstimmt.

6. Verfahren nach einem der vorhergehenden Ansprüche,
**dadurch gekennzeichnet, dass** als Eingabeaufforderung (Et1-Etx) ein QR-Code erzeugt und angezeigt wird.

7. Verfahren nach einem der vorhergehenden Ansprüche,
**dadurch gekennzeichnet, dass** statt der jeweils aktuellen Zeit (t1-tx) eine jeweilige Zufallszahl verwendet wird, die jeweils nur während einer definierten Zeitdauer gültig ist.

8. Computerprogrammprodukt (92) mit Programmcode, welcher bei der Ausführung durch wenigstens einen Computer diesen veranlassen, die Schritte des Verfahrens gemäß einem der vorhergehenden Ansprüche auszuführen.

9. Maschinenlesbarer Datenträger (90) mit darauf gespeichertem Computerprogrammprodukt (92) gemäß Anspruch 8.

10. Computersystem (10) zum Authentifizieren eines einem Benutzer zugeordneten Benutzergeräts (Bm) bei der Anmeldung an einem Server (20), umfassend:
einen Server (20) zum Generieren von jeweils nur während einer definierten Zeitdauer gültigen Eingabeaufforderungen (Et1-Etx) für jede Zeit (t1-tx), zum Speichern von Benutzer-IDs (IDB1-IDBn) sowie von Passwörtern (PB1-PBn) und zum Berechnen von Antworten (AS1-ASn) auf die Eingabeaufforderungen (Et1-Etx),
eine Mehrzahl von Benutzergeräten, von denen jedes
- zu einer Benutzergerätegruppe (B1, ..., Bm, ...Bn) gehört und sowohl eine Benutzer-ID (IDB1-IDBn) als auch ein Passwort (PB1-PBn) besitzt und
- eine Antwort (AB1-ABn) auf die Eingabeaufforderungen (Et1-Etx) berechnen kann, und eine dem Server (20) zugeordnete Anmeldemaske (31) zur Anzeige der Eingabeaufforderungen (Et1-Etx) und zur Eingabe der berechneten Antworten (AB1-ABn), wobei der Server (20) eine Steuereinrichtung zum Ausführen des Verfahrens gemäß einem der Ansprüche 1 bis 7 aufweist.

## Claims

1. A computer-implemented method for authenticating a user device (Bm) allocated to a user in the process of logging onto a server (20), the user device (Bm) belonging to a user device group (B1-Bn) known to the server (20) and having both a user ID (IDBm) and a password (PBm) known to the server (20),
comprising the following steps:
a) the server (20) generates prompts (Et1-Etx) for every time (t1-tx) each valid during a defined period of time only, and displays each of these prompts (Et1-Etx) successively and individually in a login screen (31),
b) the user device (Bm) reads in the prompt (Et2) displayed at the point of time of logging on and calculates a response (ABm) using this prompt (Et2), its password (PBm), and the current time (t2),
c) the user device (Bm) transmits the calculated response (ABm) to the login screen (31),
d) the response (ABm) is transmitted from the login screen (31) to the server (20),
e) the server (20), at least for a part of the user device group (B1-Bn), calculates a respective response (AS1-ASn) using the prompt (Et2) displayed at the point of time of logging on, the respective password (PB1-PBn) as well as the current time (t2) and compares the responses (AS1-ASn) calculated by it to the response (ABm) transmitted by the user device (Bm), and
f) the server (20) confirms the authentication for that user device (Bm) for which the response (ASm) calculated by the server (20) corresponds to the response (ABm) transmitted by the user device (Bm) .

2. The method according to claim 1,
**characterized in that** the authentication for the user device (Bm) confirmed in step f) is assumed to be provisional and the steps a) to f) are executed again after expiry of a predetermined waiting period using the current time (t3) prevailing at that point in time, after which the authentication is assumed to be final in case of repeated confirmed authentication.

3. The method according to claim 2,
**characterized in that** the server (20), during the second execution of step e), calculates only one response (ASm) for the provisionally authenticated user device (Bm) only and compares it to the response (ABm) transmitted by the user device (Bm).

4. The method according to any preceding claim,
**characterized in that** the times (t1-tx) that are used for calculating the prompts (Et1-Etx) each comprise a defined time window that is dimensioned so that, typically, the response (ABm) calculated by the user device (Bm) can be retransferred to the server (20) within that time window, preferably wherein the time window has a duration of from 30 to 60 seconds.

5. The method according to any preceding claim,
**characterized by** the following steps:
g) the server (20), at least for a part of the user device group (B1-Bn), calculates a respective additional response (AS1v-ASnv) using that prior prompt (Et1) that directly precedes the prompt (Et2) displayed at the time (t2) of logging on, the respective password (PB1-PBn) as well as the time (t1) valid during the prior prompt (Et1) and compares these responses (AS1v-ASnv) calculated by it to the response (ABm) transmitted by the user device (Bm) as well, and
h) the server (20) confirms the authentication for that user device (Bm) for which the response (ASm, ASmv) calculated by the server (20) corresponds to the response (ABm) transmitted by the user device (Bm).

6. The method according to any preceding claim,
**characterized in that** a QR code is generated and displayed as prompt (Et1-Etx).

7. The method according to any preceding claim,
**characterized in that**, instead of the respective current time (t1-tx), a respective random number is used that is valid during a defined period of time only, in each case.

8. A computer program product (92) having a program code that, when executed by at least one computer, causes this computer to perform the steps of the method according to any preceding claim.

9. A machine-readable data carrier (90) having a computer program product (92) according to claim 8 stored thereon.

10. A computer system (10) for authenticating a user device (Bm) allocated to a user in the process of logging onto a server (20), comprising:
a server (20) for generating prompts (Et1-Etx) each valid only during a defined period of time for each time (t1-tx), for storing user IDs (IDB1-IDBn) as well as passwords (PB1-PBn) and for calculating responses (AS1-ASn) to the prompts (Et1-Etx),
a plurality of user devices each of which
- belongs to a user device group (B1, ..., Bm, ...Bn) as well as has both a user ID (IDB1-IDBn) and a password (PB1-PBn) and
- is able to calculate a response (AB1-ABn) to the prompts (Et1-Etx), and a login screen (31) allocated to the server (20) for display of the prompts (Et1-Etx) and for input of the calculated responses (AB1-ABn),
wherein
the server (20) has a control device for executing the method according to any of claims 1 to 7.

## Revendications

1. Procédé mis en œuvre par ordinateur pour authentifier un équipement d'utilisateur (Bm) associé à un utilisateur lors de la demande de connexion à un serveur (20), dans lequel l'équipement d'utilisateur (Bm) appartient à un groupe d'équipements d'utilisateur (B1-Bn) connu du serveur (20) et possède aussi bien un ID d'utilisateur (IDBm) qu'un mot de passe (PBm) qui sont connus du serveur (20),
comportant les étapes suivantes :
a) le serveur (20) génère des demandes d'entrée (Et1-Etx) pour chaque temps (t1-tx), qui sont chacune valables uniquement durant une durée temporelle définie, et affiche ces demandes d'entrée (Et1-Etx) les unes après les autres chacune individuellement dans un masque de demande de connexion (31),
b) l'équipement d'utilisateur (Bm) lit la demande d'entrée (Et2) affichée à l'instant de la demande de connexion et calcule une réponse (ABm) à l'aide de cette demande d'entrée (Et2), de son mot de passe (PBm) et du temps actuel (t2),
c) l'équipement d'utilisateur (Bm) communique la réponse calculée (ABm) au masque de demande de connexion (31),
d) la réponse (ABm) est communiquée par le masque de demande de connexion (31) au serveur (20),
e) le serveur (20) calcule au moins pour une partie du groupe d'équipements d'utilisateur (B1-Bn) une réponse respective (AS1-ASn) en employant respectivement la demande d'entrée (Et2) affichée à l'instant de la demande de connexion, le mot de passe respectif (PB1-PBn) ainsi que le temps actuel (t2) et compare les réponses qu'il a calculées (AS1-ASn) à la réponse (ABm) communiquée par l'équipement d'utilisateur (Bm), et
f) le serveur (20) confirme l'authentification pour l'équipement d'utilisateur (Bm) pour lequel la réponse (ASm) calculée par le serveur (20) correspond à la réponse (ABm) communiquée par l'équipement d'utilisateur (Bm).

2. Procédé selon la revendication 1,
**caractérisé en ce que** l'authentification confirmée à l'étape f) pour l'équipement d'utilisateur (Bm) est acceptée provisoirement et les étapes a) à f) sont exécutées de nouveau après l'écoulement d'un temps d'attente prédéfini en employant le temps actuel (t3) prévalant à cet instant, à la suite de quoi, en cas d'authentification encore une fois confirmée, l'authentification est considérée comme définitive.

3. Procédé selon la revendication 2,
**caractérisé en ce que** le serveur (20), lors de la seconde exécution de l'étape e), calcule uniquement une réponse (ASm) pour l'équipement d'utilisateur (Bm) provisoirement authentifié et la compare avec la réponse (ABm) communiquée par l'équipement d'utilisateur (Bm).

4. Procédé selon l'une quelconque des revendications précédentes,
**caractérisé en ce que** les temps (t1-tx), qui sont employés pour le calcul des demandes d'entrée (Et1-Etx), comportent chacun une fenêtre de temps définie qui est dimensionnée de sorte que la réponse (ABm) calculée par l'équipement d'utilisateur (Bm) peut être transmise en retour au serveur (20) typiquement à l'intérieur de cette fenêtre de temps, dans lequel la fenêtre de temps présente de préférence une durée de 30 à 60 secondes.

5. Procédé selon l'une quelconque des revendications précédentes,
**caractérisé par** les étapes suivantes :
g) le serveur (20) calcule au moins pour une partie du groupe d'équipements d'utilisateur (B1-Bn) une réponse supplémentaire respective (AS1v-ASnv) en employant respectivement la demande d'entrée antérieure (Et1) qui précède directement la demande d'entrée (Et2) affichée à l'instant (t2) de la demande de connexion, le mot de passe respectif (PB1-PBn) ainsi que le temps (t1) valable durant la demande d'entrée antérieure (Et1), et compare ces réponses qu'il a calculées (AS1v-ASnv) également à la réponse (ABm) communiquée par l'équipement d'utilisateur (Bm), et
h) le serveur (20) confirme l'authentification pour l'équipement d'utilisateur (Bm) pour lequel la réponse (ASm, ASmv) calculée par le serveur (20) correspond à la réponse (ABm) communiquée par l'équipement d'utilisateur (Bm).

6. Procédé selon l'une quelconque des revendications précédentes,
**caractérisé en ce que**, en tant que demande d'entrée (Et1-Etx), un code QR est généré et affiché.

7. Procédé selon l'une quelconque des revendications précédentes,
**caractérisé en ce que**, au lieu du temps actuel respectif (t1-tx), est employé respectivement un nombre aléatoire qui est respectivement valable uniquement pendant une durée temporelle définie.

8. Produit-programme d'ordinateur (92) avec un code de programme qui, lors de l'exécution par au moins un ordinateur, amène celui-ci à exécuter les étapes du procédé selon l'une quelconque des revendications précédentes.

9. Support de données lisible par machine (90) sur lequel est enregistré un produit-programme d'ordinateur (92) selon la revendication 8.

10. Système informatique (10) pour l'authentification d'un équipement d'utilisateur (Bm) associé à un utilisateur lors de la demande de connexion à un serveur (20), comportant :
un serveur (20) pour la génération de demandes d'entrée (Et1-Etx) respectivement valables uniquement durant une durée temporelle définie pour chaque temps (t1-tx), pour le stockage d'ID d'utilisateur (IDB1-IDBn) ainsi que de mots de passe (PB1-PBn) et pour le calcul de réponses (AS1-ASn) aux demandes d'entrée (Et1-Etx),
une pluralité d'équipements d'utilisateur dont chacun
- appartient à un groupe d'équipements d'utilisateur (B1, ..., Bm, ...Bn) et possède aussi bien un ID d'utilisateur (IDB1-IDBn) qu'un mot de passe (PB1-PBn) et
- peut calculer une réponse (AB1-ABn) aux demandes d'entrée (Et1-Etx), et un masque de demande de connexion (31), associé au serveur (20), pour l'affichage des demandes d'entrée (Et1-Etx) et pour l'entrée des réponses calculées (AB1-ABn),
dans lequel
le serveur (20) comprend un dispositif de commande pour exécuter le procédé selon l'une quelconque des revendications 1 à 7.
